# EUROPÄISCHE PATENTSCHRIFT

(11) **EP 2 997 268 B1**
(45) Veröffentlichungstag und Bekanntmachung des Hinweises auf die Patenterteilung: **24.05.2017**
(21) Anmeldenummer: 14732812.4
(22) Anmeldetag: 28.04.2014
(51) Int. Cl.: F16B 13/02

(54) **BEFESTIGUNGSELEMENT**
ATTACHMENT ELEMENT
ÉLÉMENT DE FIXATION

(30) Priorität: 13.05.2013 AT 3912013
(43) Veröffentlichungstag der Anmeldung: 23.03.2016
(73) Patentinhaber: Schnabl Stecktechnik GmbH, 3100 St. Pölten (AT)
(72) Erfinder: BRUCKBAUER, Wolfgang, A-4893 Zell am Moos (AT); NEUMAYER, Johann, A-3100 St. Pölten (AT)
(74) Vertreter: Miksovsky, Alexander
(86) Internationale Anmeldenummer: PCT/AT2014/000094
(87) Internationale Veröffentlichungsnummer: WO 2014/183141

(56) Entgegenhaltungen:
- EP-A1- 1 434 960
- US-A- 3 439 463

## Beschreibung

Die vorliegende Erfindung bezieht sich auf ein Befestigungselement für ein Festlegen eines Gegenstands, beispielsweise eines Rohrs oder Kabels, an einer Wand, wobei ein Schaft des Befestigungselements in ein Loch in der Wand einbringbar ist und über wenigstens einen von der Schaftoberfläche vorragenden Vorsprung an der Innenoberfläche des Lochs festlegbar ist, wobei der Gegenstand an einer bei in das Loch eingeführtem Zustand des Befestigungselements außerhalb des Lochs befindlichen Halterung festlegbar ist, welche mit dem Schaft verbunden oder verbindbar ist, wobei der Schaft im Wesentlichen plattenartig ausgebildet ist und an seinem zum Lochinneren gewandten Ende mit zwei entgegengesetzt zueinander orientierten Vorsprüngen bzw. Fortsätzen ausgebildet ist, welche entgegen der Einsetzrichtung des Schafts in das Loch von dem Schaft vorragen, in Richtung zur Innenoberfläche des Lochs vorgespannt sind und deren vorragende Längen vor Einbringung in das Loch eine lichte Weite der Innenoberfläche des Lochs übersteigen.

Derartige Befestigungselemente werden beispielsweise zur Festlegung eines Rohrs oder eines Kabels an einer Wand verwendet, wie dies beispielsweise der AT-B 376 069 entnehmbar ist. Diese Befestigungselemente sind üblicherweise aus einem Kunststoff hergestellt, so dass die Verankerung derselben in einem in einer Wand hergestellten Loch unter Umständen problematisch ist und Kunststoffe üblicherweise nicht die erforderliche Festigkeit für eine Aufnahme großer Beanspruchungen bzw. hoher Lasten aufweisen. Darüber hinaus können Kunststoffe wenigstens teilweise nicht bei unterschiedlichen Temperaturbeanspruchungen oder speziellen äußeren Einflüssen eingesetzt werden, da insbesondere bei hohen Temperaturen eine zuverlässige Sicherung des Befestigungselements und insbesondere des Schafts desselben in dem Loch einer Wand nicht aufrecht erhalten werden kann.

Weitere ähnliche Ausführungsformen von Befestigungselementen, welche wenigstens teilweise aus Kunststoff hergestellt sind, lassen sich beispielsweise der US 6,276,644 B1, der AT-PS 353 875, der DE-PS 972 074, der DE 33 29 201 A1, der DE 198 24 594 A1, der US-PS 3,148,579 oder der EP 1 439 960 A1 entnehmen.

Ein Befestigungselement der eingangs genannten Art ist beispielsweise der US 3 439 463 A zu entnehmen, wobei insbesondere auf eine Festlegung von Abdeckelementen zur Verkleidung von in einer Längsrichtung verlaufenden Fugen bzw. Abständen zwischen benachbarten Konstruktionselementen abgezielt wird.

Bei einigen dieser zusätzlich genannten bekannten Ausführungsformen wird zur Erhöhung der aufzunehmenden Lasten bzw. zur Erhöhung der Sicherheit bei der Festlegung von Gegenständen auch bei unterschiedlichen Temperaturbeanspruchungen vorgesehen, dass in ein dübelartiges Element ein beispielsweise von einem Bolzen oder einer Schraube gebildetes Zusatzelement eingebracht bzw. eingesetzt wird, um derart die Haltekraft eines derartigen Befestigungselements in einer Wand oder dgl. zu erhöhen. Durch ein Vorsehen derartiger zusätzlicher Verankerungselemente ist unmittelbar ersichtlich, dass bei einem Einsatz derartiger Befestigungselemente ein zusätzlicher erhöhter Aufwand zum Einbau bzw. zur Festlegung erforderlich ist.

Die vorliegende Erfindung zielt daher darauf ab, ein Befestigungselement der eingangs genannten Art dahingehend weiterzubilden, dass die oben genannten Nachteile bzw. Probleme vermieden werden. Insbesondere wird darauf abgezielt, ein Befestigungselement zur Verfügung zu stellen, mit welchem nicht nur ein einfaches und zuverlässiges Einbringen bzw. Anordnen des Befestigungselements in einem Loch in einer Wand zur nachfolgenden Festlegung eines Gegenstands, beispielsweise eines Rohrs oder Kabels möglich wird, sondern auch sichergestellt wird, dass bei unterschiedlichen Temperaturbeanspruchungen, beispielsweise in einem Brandfall, ein derartiges Befestigungselement sowie daran festgelegte Gegenstände sicher und zuverlässig an der gewünschten Position für entsprechend lange Zeiträume, beispielsweise zur Aufrechterhaltung von Notfallsfunktionen oder Sicherungsfunktionen, festgelegt bzw. gesichert bleiben.

Zur Lösung dieser Aufgaben ist ein Befestigungselement der eingangs genannten Art im Wesentlichen dadurch gekennzeichnet, dass der Schaft über seine Längserstreckung zusätzlich zu den am Ende ausgebildeten Vorsprüngen mit wenigstens einem weiteren Vorsprung bzw. Fortsatz ausgebildet ist, welcher entgegen der Einsetzrichtung des Schafts in das Loch von dem Schaft vorragt. Da das erfindungsgemäße Befestigungselement an dem im Wesentlichen plattenartigen Schaft am Ende mit zwei entgegengesetzt zueinander orientierten Vorsprüngen bzw. Fortsätzen ausgebildet ist, ergibt sich zusätzlich durch die entgegen der Einsetzrichtung des Schafts in das Loch orientierten Vorsprünge bzw. Fortsätze nach einem Einbringen des Schafts des Befestigungselements in das Loch ein zuverlässiges Festlegen des Befestigungselements ohne zusätzlichen Einsatz von ergänzenden Festlegungselementen, wie beispielsweise Bolzen, wie dies beim Stand der Technik zur Erzielung einer entsprechend sicheren Festlegung erforderlich war. Da die Vorsprünge bzw. Fortsätze in Richtung zur Innenoberfläche des Lochs vorgespannt sind, ergibt sich in jeder eingeführten Position des Schafts des Befestigungselements eine Festlegung dieser Vorsprünge bzw. Fortsätze an der Innenoberfläche des insbesondere kreisrunden Lochs. Ein derartiges Festlegen bzw. Verkeilen insbesondere der freien Enden dieser vorragenden Vorsprünge bzw. Fortsätze wird dadurch erzielt, dass die vorragenden Längen dieser Vorsprünge bzw. Fortsätze die lichte Weite des Lochs übersteigen und diese in Richtung zu der Innenoberfläche des Lochs vorgespannt sind. Es lässt sich somit durch ein einfaches Einsetzen bzw. Einführen des Befestigungselements mit leichtem Druck in das Bohrloch ein Anbringen bzw. Festlegen desselben ohne Einsatz von Werkzeugen und ohne Einsatz von zusätzlichen Verankerungselementen bewerkstelligen, wobei die entgegen der Einsetzrichtung des Schafts vorragenden Vorsprünge bzw. Fortsätze durch ein Verkeilen an der Innenoberfläche des Lochs eine sichere Festlegung erzielen lassen. Durch ein derartiges Verkeilen wird darüber hinaus sichergestellt, dass für einen gewünschten Funktionserhalt auch unter widrigen Einsatzbedingungen eine sichere und zuverlässige Festlegung von an dem Befestigungselement festzulegenden Gegenständen, wie beispielsweise Rohren oder Kabeln über die an dem Befestigungselement vorgesehene bzw. damit verbindbare Halterung erzielbar ist. Zur weiteren Erhöhung der Verankerungswirkung als auch der Stabilität des erfindungsgemäßen Befestigungselements bei einer Festlegung in einem Loch bzw. Bohrloch wird erfindungsgemäß darüber hinaus vorgesehen, dass der Schaft über seine Längserstreckung zusätzlich zu den am Ende ausgebildeten Vorsprüngen mit wenigstens einem weiteren Vorsprung bzw. Fortsatz ausgebildet ist, welcher entgegen der Einsetzrichtung des Schafts in das Loch von dem Schaft vorragt. Derartige zusätzliche Vorsprünge bzw. Fortsätze können entsprechend den Anforderungen über die Länge des Schafts verteilt vorgesehen werden. Weiters ergeben sie insbesondere bei großen Schaftlängen eine für die gesamte Länge des Schafts vorgesehene bzw. angestrebte im Wesentlichen mittige Positionierung des Schafts im Bohrloch als auch eine Erhöhung der Verankerungswirkung des erfindungsgemäßen Befestigungselements gegenüber dem Ausziehen des Befestigungselements bzw. insbesondere des Schafts desselben aus dem Loch.

Gemäß einer bevorzugten und leicht herstellbaren Ausführungsform ist erfindungsgemäß vorgesehen, dass der Schaft von einem zweilagigen Federelement, insbesondere Blattfederelement gebildet ist und an seinem zum Lochinneren gewandten Ende an jeder Lage mit jeweils einem Vorsprung ausgebildet ist. Derart lässt sich nicht nur einfach und kostengünstig das erfindungsgemäße Befestigungselement herstellen, sondern es wird auch die sichere Verankerungswirkung durch die an dem Ende des Schafts vorgesehenen Vorsprünge bzw. Fortsätze sichergestellt.

Für eine besonders einfache Herstellung des erfindungsgemäßen Befestigungselements ist darüber hinaus bevorzugt vorgesehen, dass die am Ende des Schafts vorgesehenen Vorsprünge von entgegen der Längserstreckung des Schafts gebogenen bzw. teilweise rückgefalteten Enden gebildet sind.

Zur Vermeidung einer zusätzlichen erhöhten Beanspruchung bei Einbringung des Schafts des Befestigungselements in das Loch bei gleichzeitiger angestrebter Erhöhung bzw. Verbesserung der Verankerungswirkung ist gemäß einer weiters bevorzugten Ausführungsform vorgesehen, dass die zusätzlichen Vorsprünge eine gegenüber den am Ende des Schafts angeordneten Vorsprüngen geringere Abmessung aufweisen.

Für eine besonders einfache Herstellung dieser zusätzlichen Vorsprünge bzw. Fortsätze wird vorgeschlagen, dass die zusätzlichen Vorsprünge von ausgestanzten Teilbereichen des Schafts gebildet sind, welche aus der Ebene des Schafts gebogen bzw. gefaltet sind, wie dies einer weiters bevorzugten Ausführungsform des erfindungsgemäßen Befestigungselements entspricht.

Zur Sicherstellung einer entsprechend guten Verankerung nach Einbringung des Schafts des Befestigungselements in das Loch wird gemäß einer weiters bevorzugten Ausführungsform vorgeschlagen, dass die Vorsprünge am Ende des Schafts und/oder die zusätzlichen Vorsprünge an ihren zur Innenoberfläche des Lochs gewandten Enden eine Abrundung oder von insbesondere schräg zueinander verlaufenden Endabschnitten gebildete Kantenelemente oder sich insbesondere verjüngende Spitzen aufweisen. Bei Vorsehen einer Abrundung lässt sich insbesondere ein einfaches Einbringen des Schafts in das Loch dadurch erzielen, dass beispielsweise der Radius der Abrundung auf den Radius bzw. Durchmesser des Lochs abgestimmt ist. Bei Vorsehen von im Wesentlichen scharfkantigen Begrenzungsflächen und/oder zusätzlichen Spitzen lässt sich die Verankerungswirkung bzw. die durch die vorragenden Vorsprünge bzw. Fortsätze ausgeübte Gegenkraft gegenüber einem Ausziehen durch ein entsprechendes Verkeilen derartiger scharfkantiger Bereiche in der Wand des Lochs vergrößern.

Zur weiteren Verbesserung der Verankerungswirkung wird gemäß einer weiters bevorzugten Ausführungsform des erfindungsgemäßen Befestigungselements vorgeschlagen, dass die zusätzlichen Vorsprünge von von Seitenrändern des Schafts vorragenden Teilbereichen des Schafts gebildet sind. Durch derartige zusätzliche Vorsprünge an den Seitenrändern des Schafts lässt sich die Verankerungswirkung insbesondere an Lochrändern weiter verbessern, wobei sich derartige von Seitenrändern des Schafts vorragende Teilbereiche in einfacher Weise durch ein Stanzen bzw. entsprechende Einschnitte von den Seitenrändern des Schafts und ein Biegen der gestanzten bzw. geschnittenen Teilbereiche aus der Ebene des Schafts bilden lassen.

Zur Erhöhung der Festigkeit des erfindungsgemäßen Befestigungselements und/oder zur Erzielung hoher Festigkeitswerte bei entsprechend geringem Materialquerschnitt ist gemäß einer weiters bevorzugten Ausführungsform vorgesehen, dass der Schaft und/oder die Vorsprünge mit Verstärkungselementen, insbesondere mit in Längsrichtung verlaufenden Rippen, Rillen oder Stegen versehen ist bzw. sind. Derartige Verstärkungselemente, wie beispielsweise Rippen, Rillen oder Stege lassen sich in einfacher Weise beispielsweise an Teilbereichen des Schafts oder an den Vorsprüngen durch entsprechende Prägeverfahren bei einem metallischen Befestigungselement herstellen und erlauben eine entsprechende Verstärkung von zumindest Teilbereichen des Befestigungselements insbesondere gegenüber Biegebeanspruchungen oder allgemeinen Verformungsbeanspruchungen.

Insbesondere zur Vermeidung von gegenseitigen Verschiebungen bzw. Verlagerungen der Teilbereiche des Schafts bei einem Einsetzen in ein gegebenenfalls geringe Abmessungen aufweisendes Loch, so dass gegebenenfalls erhöhte Kräfte beim Einsetzen des Schafts in das Loch wirksam werden, wird gemäß einer weiters bevorzugten Ausführungsform vorgeschlagen, dass die zueinander insbesondere parallel verlaufenden Lagen des Schafts an ihrem zum Lochinneren gewandten Ende insbesondere durch eine Punktschweißung miteinander verbunden sind.

Für eine besonders einfache und zuverlässige Kopplung des Schafts des Befestigungselements mit einer Halterung zur Aufnahme bzw. Festlegung eines festzulegenden Gegenstands wird darüber hinaus vorgeschlagen, dass ein Teilbereich des Befestigungselements zur Festlegung bzw. Verbindung mit der Halterung oder die Halterung einstückig bzw. integral mit dem Schaft ausgebildet ist, wie dies einer weiters bevorzugten Ausführungsform des erfindungsgemäßen Befestigungselements entspricht.

Für eine besonders einfache und zuverlässige Herstellung des erfindungsgemäßen Befestigungselements wird darüber hinaus bevorzugt vorgeschlagen, dass der Teilbereich zur Festlegung der Halterung oder die Halterung sowie der Schaft aus einem einstückigen Zuschnitt gebildet sind, welcher in eine den zweilagigen Schaft als auch den Teilbereich zur Aufnahme der Halterung oder die Halterung definierende Form faltbar ist. Ein derartiger Zuschnitt lässt sich entsprechend den gewünschten Abmessungen bereitstellen, so dass das erfindungsgemäße Befestigungselement einfach und kostengünstig hergestellt werden kann.

Für eine besonders einfache und zuverlässige Kopplung einer getrennt von dem Schaft bereitzustellenden, gegebenenfalls größere Abmessungen aufweisenden Halterung wird gemäß einer weiters bevorzugten Ausführungsform vorgeschlagen, dass die Halterung mit dem aus dem Loch vorragenden Teilbereich des Befestigungselements über eine Steckverbindung koppelbar ist.

Wie bereits oben erwähnt, soll das erfindungsgemäße Befestigungselement auch bei unterschiedlichen Temperaturbeanspruchungen, beispielsweise in einem Brandfall über teilweise durch entsprechende Normen vorgeschriebene vergleichsweise große Zeiträume einen sicheren Funktionserhalt von durch derartige Befestigungselemente festzulegenden Gegenständen sicherstellen. In diesem Zusammenhang wird gemäß einer weiters bevorzugten Ausführungsform des erfindungsgemäßen Befestigungselements vorgeschlagen, dass der Schaft sowie der Teilbereich zur Festlegung der Halterung oder die Halterung aus einem hochtemperaturbeständigen Material ausgebildet sind.

Zur Erfüllung entsprechend hoher Anforderungen insbesondere an eine Temperaturbeständigkeit in einem Brandfall wird gemäß einer weiters bevorzugten Ausführungsform vorgesehen, dass der Schaft aus einem Metall, insbesondere Federstahl gebildet ist. In diesem Zusammenhang wird ergänzend und bevorzugt darüber hinaus vorgeschlagen, dass die Halterung aus einem metallischen Material ausgebildet ist.

Insbesondere in Abhängigkeit von einem festzulegenden Gegenstand und zum Schutz desselben bei einer Festlegung wird darüber hinaus vorgeschlagen, dass das metallische Material der Halterung mit einer Ummantelung, insbesondere aus Kunststoff versehen ist, wie dies einer weiters bevorzugten Ausführungsform des erfindungsgemäßen Befestigungselements entspricht.

Unter Berücksichtigung von unterschiedlichen festzulegenden Gegenständen wird darüber hinaus erfindungsgemäß bevorzugt vorgeschlagen, dass die Halterung von einem Sammelhalter, Kabelbügel, einer Einfach- oder Mehrfachschelle oder dgl. gebildet ist.

Die Erfindung wird nachfolgend anhand von in der beiliegenden Zeichnung schematisch dargestellten Ausführungsbeispielen näher erläutert. In dieser zeigen:
Fig. 1 eine perspektivische Ansicht einer ersten Ausführungsform eines erfindungsgemäßen Befestigungselements;
Fig. 2 eine Seitenansicht auf das Befestigungselement von Fig. 1, wobei zusätzlich eine an einem Teilbereich des Befestigungselements verschieden von dem Schaft angeordnete Halterung zur Festlegung eines Gegenstands angedeutet ist;
Fig. 3 eine Seitenansicht auf den Schaft des Befestigungselements gemäß Fig. 1;
Fig. 4 in einer zu Fig. 3 ähnlichen Darstellung eine Ansicht auf den Schaft einer abgewandelten Ausführungsform eines erfindungsgemäßen Befestigungselements;
Fig. 5 eine Draufsicht auf einen Zuschnitt zur Ausbildung eines erfindungsgemäßen Befestigungselements, wie dies beispielsweise in Fig. 1 bis 3 oder Fig. 4 dargestellt ist;
Fig. 6 bis Fig. 8 schematische Ansichten von weiteren unterschiedlichen Ausführungsformen eines erfindungsgemäßen Befestigungselements mit unterschiedlichen Ausbildungen von integrierten Halterungen zur Festlegung eines Gegenstands;
Fig. 9 eine perspektivische Ansicht einer weiteren Ausführungsform eines erfindungsgemäßen Befestigungselements ähnlich der Darstellung von Fig. 1;
Fig. 10 eine Seitenansicht auf das Befestigungselement von Fig. 9;
Fig. 11 eine Seitenansicht auf den Schaft des Befestigungselements von Fig. 9.

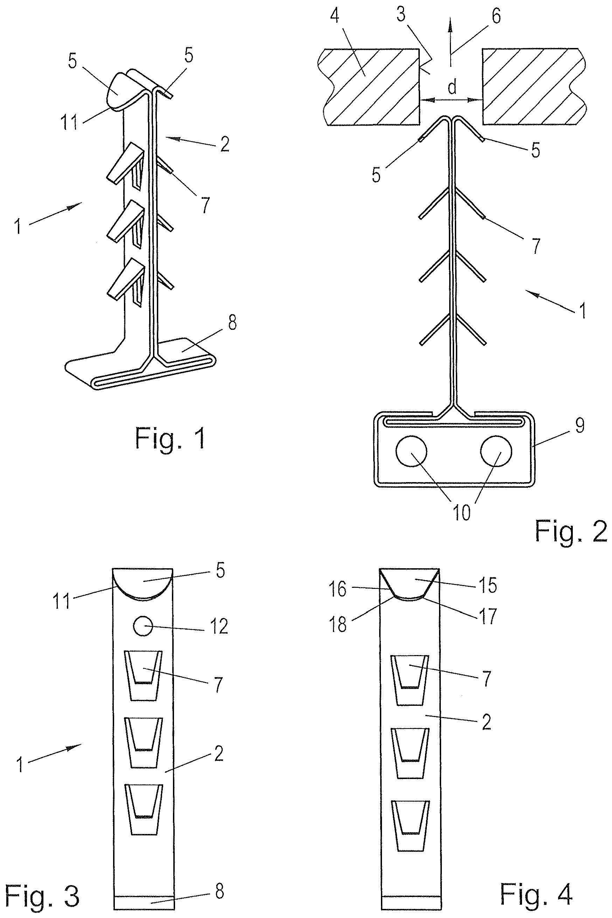

In Fig. 1 bis 3 ist mit 1 eine erste Ausführungsform eines Befestigungselements bezeichnet, wobei an einem im Wesentlichen plattenartigen und aus zwei Lagen gebildeten Schaft 2 an den zu einem in Fig. 2 schematisch mit 3 bezeichneten Loch in einer Wand 4 gewandten Enden jeweils ein Vorsprung bzw. Fortsatz 5 ausgebildet ist. Die Vorsprünge bzw. Fortsätze 5 an den freien Enden des Schafts 2 sind entgegen der in Fig. 2 mit 6 bezeichneten Einsetzrichtung in das Loch 3 orientiert, sind bei einer Ausbildung zumindest des Schafts 2 des Befestigungselements 1 aus einem Federelement, insbesondere Blattfederelement in Richtung zu der Begrenzungswand des Lochs 3 vorgespannt und weisen eine vorragende Länge auf, welche, wie dies insbesondere aus Fig. 2 ersichtlich ist, die lichte Weite d bzw. den Innendurchmesser des Lochs 3 geringfügig übersteigt.

Neben diesen an den freien Enden des Schafts 2 vorgesehenen Vorsprüngen bzw. Erhebungen 5 sind zusätzlich über die Länge des Schafts 2 verteilt weitere Vorsprünge bzw. Fortsätze 7 vorgesehen, welche, wie dies insbesondere aus Fig. 1 und 3 ersichtlich ist, gegenüber den an den freien Enden vorgesehenen Vorsprüngen 5 eine geringere Abmessung aufweisen. Diese zusätzlichen Vorsprünge bzw. Fortsätze 7 sind beispielsweise durch ein Stanzen der plattenartigen Lagen des Schafts 2 ausgebildet und sind ebenso wie die an den freien Enden vorgesehenen Vorsprünge 5 entgegen der Einsetzrichtung 6 des Befestigungselements 1 in das Loch 3 orientiert.

Durch die Orientierung der Vorsprünge bzw. Fortsätze 5 bzw. 7 entgegen der Einsetzrichtung 6 erfolgt durch ein Anliegen der vorragenden Enden der Vorsprünge bzw. Fortsätze 5 bzw. 7 eine Sicherung des Befestigungselements 1 im Loch 3, wobei das Befestigungselement 1 durch ein einfaches Einsetzen bzw. leichtes Eindrücken des Schafts 2 mit den Fortsätzen 5 bzw. 7 in das Loch 3 darin eingebracht werden kann. Ein derartiges Verkeilen der freien Enden der Vorsprünge bzw. Fortsätze 5 bzw. 7 wirkt einem Ausziehen des Befestigungselements 1 entgegen der Einsetzrichtung 6 unmittelbar entgegen, so dass das Befestigungselement 1 derart leicht und zuverlässig in dem Loch 3 verankert werden kann.

Eine Sicherung der relativen Positionierung der Lagen des Schafts 2 ist in Fig. 3 durch eine Punktschweißung 12 angedeutet.

Aus Fig. 1 und 2 ist insbesondere ersichtlich, dass an dem von den vorragenden Fortsätzen bzw. Vorsprüngen 5 abgewandten Ende des Schafts 2 ein Teilbereich 8 vorgesehen ist, welcher bei der in Fig. 1 bis 3 dargestellten Ausführungsform zu der Anordnung bzw. Kopplung mit einer Halterung 9 vorgesehen ist, wie dies aus Fig. 2 ersichtlich ist. Diese Halterung 9 kann über eine einfache Steckverbindung an dem Teilbereich 8 des Befestigungselements 1 festgelegt werden. Wie dies ebenfalls in Fig. 2 schematisch angedeutet ist, können in einer derartigen kastenförmigen Halterung in weiterer Folge ein festzulegender Gegenstand, wie beispielsweise Rohre oder Kabel 10 aufgenommen und durch Festlegung des Befestigungselements 1 im Loch 3 an einer Wand 4 gesichert werden.

Während bei einer Ausführungsform gemäß Fig. 1 bis 3 die Vorsprünge bzw. Fortsätze 5 am Ende des Schafts 2 im Wesentlichen mit einer Abrundung 11 ausgebildet sind, ist bei der in Fig. 4 dargestellten abgewandelten Ausführungsform für die Vorsprünge bzw. Fortsätze, welche in Fig. 4 mit 15 bezeichnet sind, vorgesehen, dass wenigstens teilweise schräg zueinander verlaufende Kantenelemente 16 und 17 angeordnet sind, welche ähnlich wie bei den zusätzlichen Fortsätzen 7 scharfkantige Teilbereiche 18 ergeben. Durch derartige scharfkantige Teilbereiche 18 lässt sich eine Verankerungswirkung in dem Loch 3 insbesondere der an den freien Enden des Schafts 2 vorgesehenen Vorsprünge bzw. Fortsätze 15 verbessern.

Demgegenüber ist bei der Ausführungsform gemäß Fig. 1 bis 3 durch Vorsehen der Abrundung 11 ein entsprechend einfaches und zuverlässiges Einbringen der an den freien Enden des Schafts 2 vorgesehenen Vorsprünge bzw. Fortsätze 5 erzielbar.

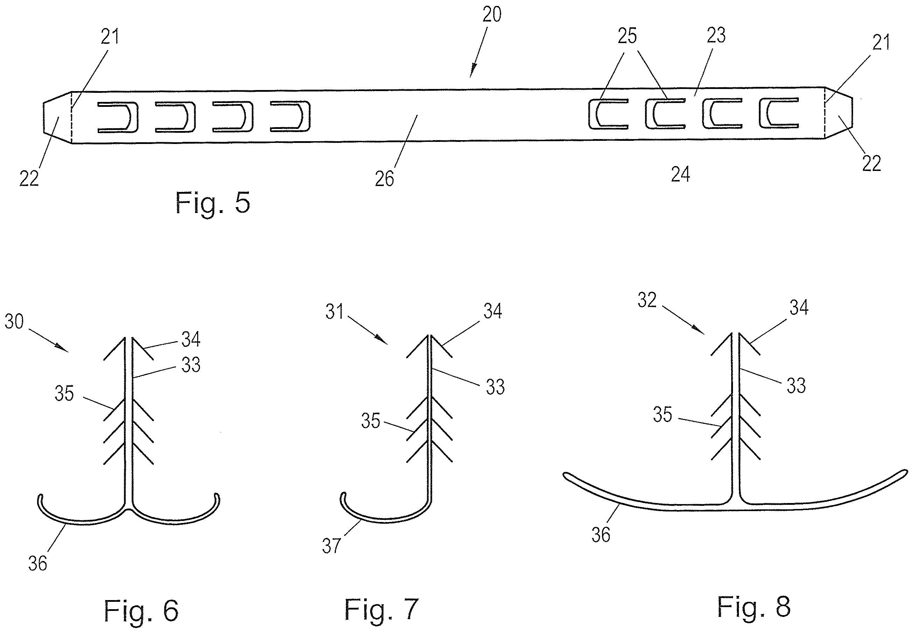

In Fig. 5 ist schematisch eine Draufsicht auf einen Zuschnitt 20 eines herzustellenden Befestigungselements gezeigt. Ein derartiger Zuschnitt 20 weist eine überaus einfache Form auf, wobei die an den freien Enden vorgesehenen Vorsprünge bzw. Fortsätze 22 entlang einer mit 21 bezeichneten Faltlinie rückgefaltet werden, um derart Vorsprünge bzw. Fortsätze 22 zu ergeben.

Die zusätzlich über die Länge des mit 23 bezeichneten Schafts vorgesehenen Vorsprünge bzw. Erhebungen 24 werden durch ausgestanzte Bereiche 25 hergestellt und ebenfalls in einfacher Weise aus der durch den Schaft 23 definierten Ebene gebogen.

Entsprechend dem herzustellenden Teilbereich 8, wie er bei der Ausführungsform gemäß Fig. 1 bis 3 ersichtlich ist, ist ein mittlerer Bereich 26 des Zuschnitts 20 vorgesehen, wobei die zur Ausbildung des Teilbereichs 8 vorzusehenden Faltlinien der Einfachheit halber in der Darstellung gemäß Fig. 5 nicht näher gezeigt sind.

In Fig. 6 bis 8 sind weitere abgewandelte Ausführungsformen von Befestigungselementen 30, 31 bzw. 32 dargestellt, welche wie bei den vorangehenden Ausführungsformen jeweils an ihren freien Enden eines jeweils mit 33 bezeichneten Schafts entsprechende Vorsprünge bzw. Fortsätze 34 aufweisen. Zusätzliche Vorsprünge bzw. Fortsätze, welche über die Länge des Schafts 33 verteilt sind und beispielsweise von Austanzungen wie bei den vorangehenden Ausführungsformen gebildet sind, sind jeweils mit 35 bezeichnet.

Abgewandelt zu den vorangehenden Ausführungsformen ist bei den in Fig. 6 bis 8 dargestellten Ausführungsbeispielen angedeutet, dass jeweils eine Halterung integral bzw. einstückig mit dem Schaft 33 ausgebildet ist, wobei in Fig. 6 und 8 jeweils im Wesentlichen symmetrisch ausgebildete Halterungen, beispielsweise in Form eines Kabelbügels bzw. einer Mehrfachschelle angedeutet sind, während bei der Ausführungsform gemäß Fig. 7 eine Einfachschelle 37 angedeutet ist.

Bei Herstellung derartiger Befestigungselemente 30, 31 oder 32 aus einem Zuschnitt, wie er in Fig. 5 angedeutet ist, ist zur zusätzlichen Ausbildung der Halterungen 36 bzw. 37 ein entsprechend größer bzw. länger bemessener mittlerer Bereich vorgesehen, welcher in Fig. 5 mit 26 bezeichnet ist.

Anstelle der Integration der Halterungen 36 bzw. 37 in das Befestigungselement 30, 31 bzw. 32, wie dies in Fig. 6 bis 8 gezeigt ist, können derartige Halterungen in Form von Kabelbügeln oder Schellen auch getrennt ausgebildet bzw. vorgesehen werden und ähnlich wie bei der Ausbildung gemäß Fig. 2 an einem Teilbereich des Befestigungselements festgelegt werden.

Zur Erzielung entsprechender Festigkeiten bzw. Widerstandsfähigkeiten beispielsweise bei unterschiedlichen Temperaturbeanspruchungen, wie beispielsweise in einem Brandfall, ist ein Befestigungselement bzw. ein derartiger Zuschnitt, wie er in Fig. 5 gezeigt ist, aus einem entsprechenden hochtemperaturbeständigen Material, insbesondere metallischen Material ausgebildet. Bei Ausbildung aus einem Metall, insbesondere Federstahl, lässt sich auch eine entsprechend gute Verankerungswirkung über die entgegen der Einsetzrichtung des Schafts der Befestigungselemente orientierten Vorsprünge bzw. Fortsätze erzielen.

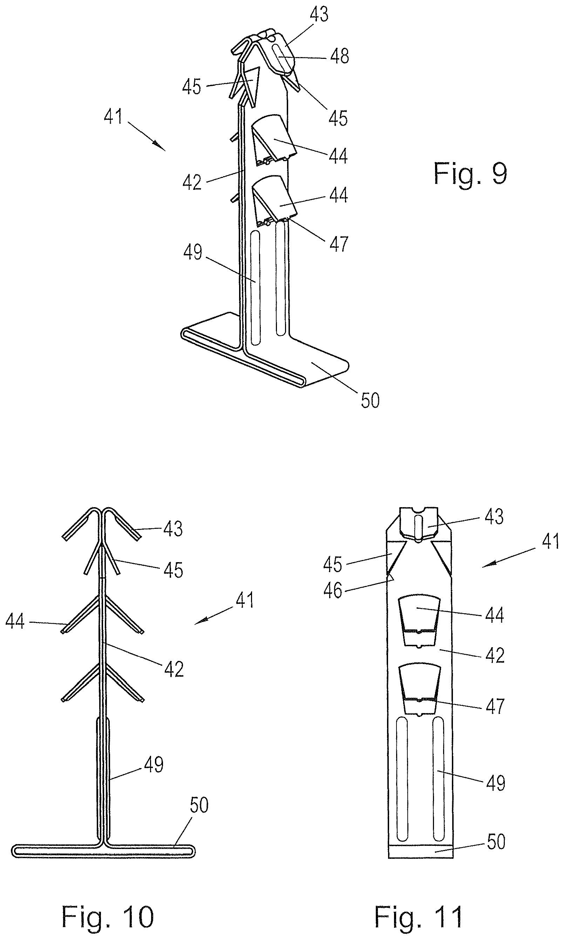

Bei dem in Fig. 9 bis 11 dargestellten weiteren Befestigungselement 41 ragen wiederum von Enden des Schafts 42 Vorsprünge bzw. Fortsätze 43 vor, welche wie bei den vorangegangenen Ausführungsformen durch entgegen der Erstreckungsrichtung des Schafts 42 gebogene Teilbereiche gebildet sind.

Darüber hinaus sind entlang der Längserstreckung des Schafts 42 zusätzliche Vorsprünge bzw. Fortsätze 44 vorgesehen, welche ebenso wie bei den vorangehenden Ausführungsformen beispielsweise durch ein Stanzen der plattenartigen Schichten bzw. Lagen des Schafts 42 und ein Biegen aus der Ebene des Schafts gebildet werden.

Neben diesen im Wesentlichen mittigen entlang der Längserstreckung des Schafts 42 vorgesehenen zusätzlichen Vorsprüngen bzw. Fortsätzen 44 sind insbesondere nahe den Endbereichen des Schafts 42 weitere Vorsprünge bzw. Fortsätze 45 ersichtlich, welche von Seitenrändern des Schafts 42 jeweils vorragen. Diese zusätzlichen Vorsprünge 45 werden beispielsweise durch Ausbildung von entsprechenden Schnitten entlang der Seitenränder und Biegen der entsprechenden Teilbereiche aus der Ebene des Schafts 42 gebildet, wobei derartige Schnitte beispielsweise in Fig. 11 mit 46 angedeutet sind. Diese zusätzlichen, an den Seitenrändern des Schafts 42 vorgesehenen Vorsprünge bzw. Fortsätze 45 dienen insbesondere zu einer Verankerung in Randbereichen des in ein insbesondere kreisrundes Loch eingeführten Befestigungselements 41, so dass der vorragende Abstand dieser zusätzlichen Vorsprünge 45 geringer als der vorragende Abstand der im Wesentlichen mittigen zusätzlichen Vorsprünge 44 sowie der an den Enden vorgesehenen Vorsprünge 43 ist, wie dies deutlich aus Fig. 10 ersichtlich ist.

Zur weiteren Verbesserung der Verankerungswirkung sind bei der Ausführungsform gemäß Fig. 9 bis 11 insbesondere an den im Wesentlichen mittig angeordneten zusätzlichen Vorsprüngen 44 an deren vorragenden Endkanten sich verjüngende Spitzen 47 vorgesehen, welche die Verankerungswirkung des Befestigungselements 41 weiter verbessern.

Zur Erhöhung der Festigkeit des Befestigungselements 41 weisen die an den Enden des Schafts 42 vorgesehenen Vorsprünge bzw. Fortsätze durch Rillen bzw. Rippen 48 gebildete Verstärkungselemente auf, wobei diese Rillen bzw. Rippen 48 beispielsweise durch ein Prägen hergestellt werden können und insbesondere in Längsrichtung dieser Vorsprünge 43 verlaufen.

Ebenfalls zur Erhöhung der Festigkeit des Schafts 42 beispielsweise gegenüber Verformungsbeanspruchungen sind am Schaft 42 insbesondere in von Vorsprüngen 44 freien Teilbereichen Verstärkungen ebenfalls in Form von Rippen 49 vorgesehen, durch welche beispielsweise die Verwindungssteifigkeit des Befestigungselements 41 erhöht werden kann.

Wie bei den vorangegangenen Ausführungsformen ist an dem von den vorragenden Vorsprüngen bzw. Fortsätzen 43 abgewandten Endbereich des Schafts 42 ein Teilbereich 50 vorgesehen, welcher in weiterer Folge mit einer nicht näher dargestellten Halterung für einen beispielsweise festzulegenden Gegenstand verbunden werden kann bzw. mit einer derartigen Halterung zusammenwirkt.

## Patentansprüche

1. Befestigungselement für ein Festlegen eines Gegenstands (10), beispielsweise eines Rohrs oder Kabels, an einer Wand (4), wobei ein Schaft (2, 23, 33, 42) des Befestigungselements (1, 20, 30, 31, 32, 41) in ein Loch (3) in der Wand (4) einbringbar ist und über wenigstens einen von der Schaftoberfläche vorragenden Vorsprung an der Innenoberfläche des Lochs (3) festlegbar ist, wobei der Gegenstand (10) an einer bei in das Loch (3) eingeführtem Zustand des Befestigungselements (1, 20, 30, 31, 32, 41) außerhalb des Lochs (3) befindlichen Halterung (9) festlegbar ist, welche mit dem Schaft (2, 23, 33, 42) verbunden oder verbindbar ist, wobei der Schaft (2, 23, 33, 42) im Wesentlichen plattenartig ausgebildet ist und an seinem zum Lochinneren gewandten Ende mit zwei entgegengesetzt zueinander orientierten Vorsprüngen bzw. Fortsätzen (5, 15, 22, 34, 43) ausgebildet ist, welche entgegen der Einsetzrichtung (6) des Schafts (2, 23, 33, 42) in das Loch (3) von dem Schaft (2, 23, 33, 42) vorragen, in Richtung zur Innenoberfläche des Lochs (3) vorgespannt sind und deren vorragende Längen vor Einbringung in das Loch (3) eine lichte Weite (d) der Innenoberfläche des Lochs (3) übersteigen, **dadurch gekennzeichnet, dass** der Schaft (2, 23, 33, 42) über seine Längserstreckung zusätzlich zu den am Ende ausgebildeten Vorsprüngen (5, 15, 22, 34, 43) mit wenigstens einem weiteren Vorsprung bzw. Fortsatz (7, 24, 35, 44, 45) ausgebildet ist, welcher entgegen der Einsetzrichtung (6) des Schafts (2, 23, 33, 42) in das Loch (3) von dem Schaft (2, 23, 33, 42) vorragt.

2. Befestigungselement nach Anspruch 1, **dadurch gekennzeichnet, dass** der Schaft (2, 23, 33, 42) von einem zweilagigen Federelement, insbesondere Blattfederelement gebildet ist und an seinem zum Lochinneren gewandten Ende an jeder Lage mit jeweils einem Vorsprung (5, 15, 22, 34, 43) ausgebildet ist.

3. Befestigungselement nach Anspruch 1 oder 2, **dadurch gekennzeichnet, dass** die am Ende des Schafts (2, 23, 33, 42) vorgesehenen Vorsprünge (5, 15, 22, 34, 43) von entgegen der Längserstreckung des Schafts (2, 23, 33, 42) gebogenen bzw. teilweise rückgefalteten Enden gebildet sind.

4. Befestigungselement nach Anspruch 1, 2 oder 3, **dadurch gekennzeichnet, dass** die zusätzlichen Vorsprünge (7, 24, 35, 44, 45) eine gegenüber den am Ende des Schafts (2, 23, 33, 42) angeordneten Vorsprüngen (5, 15, 22, 34, 43) geringere Abmessung aufweisen.

5. Befestigungselement nach einem der Ansprüche 1 bis 4, **dadurch gekennzeichnet, dass** die zusätzlichen Vorsprünge (7, 24, 35, 44, 45) von ausgestanzten Teilbereichen des Schafts gebildet sind, welche aus der Ebene des Schafts (2, 23, 33, 42) gebogen bzw. gefaltet sind.

6. Befestigungselement nach einem der Ansprüche 1 bis 5, **dadurch gekennzeichnet, dass** die Vorsprünge (5, 15, 22, 34, 43) am Ende des Schafts (2, 23, 33, 42) und/oder die zusätzlichen Vorsprünge (7, 24, 35, 44, 45) an ihren zur Innenoberfläche des Lochs gewandten Enden eine Abrundung (11) oder von insbesondere schräg zueinander verlaufenden Endabschnitten gebildete Kantenelemente (16, 17) oder sich insbesondere verjüngende Spitzen (47) aufweisen.

7. Befestigungselement nach einem der Ansprüche 1 bis 6, **dadurch gekennzeichnet, dass** die zusätzlichen Vorsprünge (45) von von Seitenrändern des Schafts (42) vorragenden Teilbereichen des Schafts (42) gebildet sind.

8. Befestigungselement nach einem der Ansprüche 1 bis 7, **dadurch gekennzeichnet, dass** der Schaft (42) und/oder die Vorsprünge (44) mit Verstärkungselementen (48, 49), insbesondere mit in Längsrichtung verlaufenden Rippen, Rillen oder Stegen versehen ist bzw. sind.

9. Befestigungselement nach einem der Ansprüche 1 bis 8, **dadurch gekennzeichnet, dass** die zueinander insbesondere parallel verlaufenden Lagen des Schafts (2) an ihrem zum Lochinneren gewandten Ende insbesondere durch eine Punktschweißung (12) miteinander verbunden sind.

10. Befestigungselement nach einem der Ansprüche 1 bis 9, **dadurch gekennzeichnet, dass** ein Teilbereich (8) des Befestigungselements (1) zur Festlegung bzw. Verbindung mit der Halterung (9) oder die Halterung (36, 37, 50) einstückig bzw. integral mit dem Schaft (33, 42) ausgebildet ist.

11. Befestigungselement nach Anspruch 10, **dadurch gekennzeichnet, dass** der Teilbereich zur Festlegung der Halterung oder die Halterung sowie der Schaft aus einem einstückigen Zuschnitt (20) gebildet sind, welcher in eine den zweilagigen Schaft als auch den Teilbereich zur Aufnahme der Halterung oder die Halterung definierende Form faltbar ist.

12. Befestigungselement nach einem der Ansprüche 1 bis 11, **dadurch gekennzeichnet, dass** die Halterung (9) mit dem aus dem Loch (3) vorragenden Teilbereich (8) des Befestigungselements (2) über eine Steckverbindung koppelbar ist.

13. Befestigungselement nach einem der Ansprüche 1 bis 12, **dadurch gekennzeichnet, dass** der Schaft (2, 23, 33, 42) sowie der Teilbereich (8, 50) zur Festlegung der Halterung (9) oder die Halterung (36, 37) aus einem hochtemperaturbeständigen Material ausgebildet sind.

14. Befestigungselement nach einem der Ansprüche 1 bis 13, **dadurch gekennzeichnet, dass** der Schaft (2, 23, 33, 42) aus einem Metall, insbesondere Federstahl gebildet ist.

15. Befestigungselement nach einem der Ansprüche 1 bis 14, **dadurch gekennzeichnet, dass** die Halterung (9, 36, 37) aus einem metallischen Material ausgebildet ist.

16. Befestigungselement nach Anspruch 15, **dadurch gekennzeichnet, dass** das metallische Material der Halterung (9, 36, 37) mit einer Ummantelung, insbesondere aus Kunststoff versehen ist.

17. Befestigungselement nach einem der Ansprüche 1 bis 16, **dadurch gekennzeichnet, dass** die Halterung (9, 36, 37) von einem Sammelhalter, Kabelbügel, einer Einfach- oder Mehrfachschelle oder dgl. gebildet ist.

## Claims

1. An attachment element for fixing an object (10), e.g. a tube or cable, to a wall (4), wherein a shaft (2, 23, 33, 42) of the fasting element (1, 20, 30, 31, 32, 41) can be inserted into a hole (3) in the wall (4) and fixed to the interior surface of the hole (3) via at least one projection projecting from the surface of the shaft, wherein the object (10) can be fixed to a bracket (9) that is located outside the hole (3) with the attachment element (1, 20, 30, 31, 32, 41) inserted in the hole (3), which bracket is connected or connectable to the shaft (2, 23, 33, 42), wherein the shaft (2, 23, 33, 42) is substantially plate-shaped and, on its end facing the interior of the hole, is formed with two oppositely oriented projections or protrusions (5, 15, 22, 34, 43) which project from the shaft (2, 23, 33, 42) oppositely to the direction of insertion (6) of the shaft (2, 23, 33, 42) into the hole (3), are prestressed in the direction to the interior surface of the hole (3), and whose projecting lengths exceed a clear width (d) of the interior surface of the hole (3) prior to their insertion into the hole (3), **characterized in that** the shaft (2, 23, 33, 42) is formed with at least one further projection or protrusion (7, 24, 35, 44, 45) over its longitudinal extension in addition to the projections (5, 15, 22, 34, 43) formed on its end, projecting from the shaft (2, 23, 33, 42) oppositely to the direction of insertion (6) of the shaft (2, 23, 33, 42) into the hole (3).

2. An attachment element according to claim 1, **characterized in that** the shaft (2, 23, 33, 42) is formed by a double-layer spring element, in particular leaf spring element, and, on its end facing the interior of the hole, is each formed with a projection (5, 15, 22, 34, 43) on each layer.

3. An attachment element according to claim 1 or 2, **characterized in that** the projections (5, 15, 22, 34, 43) provided on the end of the shaft (2, 23, 33, 42) are formed by ends that are bent oppositely to the longitudinal extension of the shaft (2, 23, 33, 42) or ends that are partially folded back.

4. An attachment element according to claim 1, 2 or 3, **characterized in that** the additional projections (7, 24, 35, 44, 45) have dimensions reduced relative to those of the projections (5, 15, 22, 34, 43) disposed on the end of the shaft (2, 23, 33, 42).

5. An attachment element according to any of the claims 1 to 4, **characterized in that** the additional projections (7, 24, 35, 44, 45) are formed by punched-out partial regions of the shaft, which are bent or folded out of the plane of the shaft (2, 23, 33, 42).

6. An attachment element according to any one of claims 1 to 5, **characterized in that** the projections (5, 15, 22, 34, 43) provided on the end of the shaft (2, 23, 33, 42) and/or the additional projections (7, 24, 35, 44, 45), on their ends facing the interior surface of the hole, comprise roundings (11), or edge elements (16, 17) formed in particular by mutually obliquely extending end portions, or tips (47), in particular tapering tips (47).

7. An attachment element according to any one of claims 1 to 6, **characterized in that** the additional projections (45) are formed by partial regions of the shaft (42) projecting from side edges of the shaft (42).

8. An attachment element according to any one of claims 1 to 7, **characterized in that** the shaft (42) and/or the projections (44) is/are provided with reinforcing elements (48, 49), in particular ribs, grooves or webs extending in the longitudinal direction.

9. An attachment element according to any one of claims 1 to 8, **characterized in that** the layers of the shaft (2), which, in particular, extend in parallel with each other, are connected to each other, in particular by a spot-weld (12), on their ends facing the interior of the hole.

10. An attachment element according to any one of claims 1 to 9, **characterized in that** a partial region (8) of the attachment element (1) intended for fixation or connection to the bracket (9), or the bracket (36, 37, 50), is designed in one piece or integral with the shaft (33, 42).

11. An attachment element according to claim 10, **characterized in that** the partial region intended for fixation of the bracket, or the bracket, and the shaft are made of a one-piece blank (20) capable of being folded into a shape defining both the double-layer shaft and the partial region for receiving the bracket, or the bracket.

12. An attachment element according to any one of claims 1 to 11, **characterized in that** the bracket (9) can be coupled to the partial region (8) projecting out of the hole (3), of the attachment element (2) via a plug-in connection.

13. An attachment element according to any one of claims 1 to 12, **characterized in that** the shaft (2, 23, 33, 42) and the partial region (8, 50) intended for fixation of the bracket (9), or the bracket (36, 37), are made of a high-temperature-resistant material.

14. An attachment element according to any one of claims 1 to 13, **characterized in that** the shaft (2, 23, 33, 42) is made of a metal, in particular spring steel.

15. An attachment element according to any one of claims 1 to 14, **characterized in that** the bracket (9, 36, 37) is made of a metallic material.

16. An attachment element according to claim 15, **characterized in that** the metallic material of the bracket (9, 36, 37) is provided with a sheath made, in particular, of plastic.

17. An attachment element according to any one of claims 1 to 16, **characterized in that** the bracket (9, 36, 37) is formed by a collective holder, a cable bracket, a single or multiple clamp or the like.

## Revendications

1. Elément de fixation pour une fixation d'un objet (10), par exemple d'un tuyau ou d'un câble, au niveau d'un mur (4), dans lequel une tige (2, 23, 33, 42) de l'élément de fixation (1, 20, 30, 31, 32, 41) peut être introduite dans un trou (3) dans le mur (4) et peut être fixée au niveau de la surface intérieure du trou (3) par l'intermédiaire au moins d'une partie saillante faisant saillie de la surface de tige, dans lequel l'objet (10) peut être fixé au niveau d'un support (9) se trouvant à l'extérieur du trou (3) lorsque l'élément de fixation (1, 20, 30, 31, 32, 41) est introduit dans le trou (3), lequel support est relié ou peut être relié à la tige (2, 23, 33, 42), dans lequel la tige (2, 23, 33, 42) est réalisée sensiblement à la manière d'une plaque et est réalisée, au niveau de son extrémité tournée vers l'intérieur du trou, avec deux parties saillantes ou prolongements (5, 15, 22, 34, 43) orientées ou orientés de manière opposée entre eux, lesquelles ou lesquels font saillie de la tige (2, 23, 33, 42) dans le sens opposé à la direction d'insertion (6) de la tige (2, 23, 33, 42) dans le trou (3), sont précontraintes ou précontraints dans la direction de la surface intérieure du trou (3) et dont les longueurs faisant saillie dépassent, avant l'introduction dans le trou (3), une largeur (d) interne de la surface intérieure du trou (3), **caractérisé en ce que** la tige (2, 23, 33, 42) est réalisée, sur son extension longitudinale, en plus des parties saillantes (5, 15, 22, 34, 43) réalisées au niveau de l'extrémité, avec au moins une autre partie saillante ou un autre prolongement (7, 24, 35, 44, 45), laquelle ou lequel fait saillie de la tige (2, 23, 33, 42) dans le sens opposé à la direction d'insertion (6) de la tige (2, 23, 33, 42) dans le trou (3).

2. Elément de fixation selon la revendication 1, **caractérisé en ce que** la tige (2, 23, 33, 42) est formée par un élément formant ressort à deux couches, en particulier par un élément formant ressort à lames et est réalisée, au niveau de son extrémité tournée vers l'intérieur du trou, au niveau de chaque position, avec respectivement une partie saillante (5, 15, 22, 34, 43).

3. Elément de fixation selon la revendication 1 ou 2, **caractérisé en ce que** les parties saillantes (5, 15, 22, 34, 43) prévues au niveau de l'extrémité de la tige (2, 23, 33, 42) sont formées par des extrémités courbées ou en partie repliées dans le sens opposé à l'extension longitudinale de la tige (2, 23, 33, 42).

4. Elément de fixation selon la revendication 1, 2 ou 3, **caractérisé en ce que** les parties saillantes (7, 24, 35, 44, 45) supplémentaires présentent une dimension inférieure par rapport aux parties saillantes (5, 15, 22, 34, 43) disposées au niveau de l'extrémité de la tige (2, 23, 33, 42).

5. Elément de fixation selon l'une quelconque des revendications 1 à 4, **caractérisé en ce que** les parties saillantes (7, 24, 35, 44, 45) supplémentaires sont formées par des zones partielles découpées à la matrice de la tige, qui sont courbées ou pliées depuis le plan de la tige (2, 23, 33, 42).

6. Elément de fixation selon l'une quelconque des revendications 1 à 5, **caractérisé en ce que** les parties saillantes (5, 15, 22, 34, 43), au niveau de l'extrémité de la tige (2, 23, 33, 42) et/ou les parties saillantes (7, 24, 35, 44, 45) supplémentaires, au niveau de leurs extrémités tournées vers la surface intérieure du trou, présentent un arrondi (11) ou des éléments formant arêtes (16, 17) formés par des sections d'extrémité s'étendant en particulier de manière inclinée les unes par rapport aux autres ou des pointes (47) se rétrécissant en particulier.

7. Elément de fixation selon l'une quelconque des revendications 1 à 6, **caractérisé en ce que** les parties saillantes (45) supplémentaires sont formées par des zones partielles, faisant saillie de bords latéraux de la tige (42), de la tige (42).

8. Elément de fixation selon l'une quelconque des revendications 1 à 7, **caractérisé en ce que** la tige (42) et/ou les parties saillantes (44) est pourvue ou sont pourvues d'éléments de renforcement (48, 49), en particulier de nervures, de rainures ou d'entretoises s'étendant dans la direction longitudinale.

9. Elément de fixation selon l'une quelconque des revendications 1 à 8, **caractérisé en ce que** les couches, s'étendant en particulier de manière parallèle les unes par rapport aux autres, de la tige (2) sont reliées les unes aux autres au niveau de leur extrémité tournée vers l'intérieur du trou, en particulier par un soudage par points (12).

10. Elément de fixation selon l'une quelconque des revendications 1 à 9, **caractérisé en ce qu'**une zone partielle (8) de l'élément de fixation (1) destinée à être fixée ou à être reliée au support (9) ou le support (36, 37, 50) est réalisée ou réalisé d'un seul tenant ou d'une seule pièce avec la tige (33, 42).

11. Elément de fixation selon la revendication 10, **caractérisé en ce que** la zone partielle destinée à fixer le support, ou le support et la tige sont formés à partir d'une découpe (20) d'un seul tenant, qui peut être pliée en une forme définissant à la fois la tige en deux couches et la zone partielle servant à recevoir le support, ou le support.

12. Elément de fixation selon l'une quelconque des revendications 1 à 11, **caractérisé en ce que** le support (9) peut être couplé par l'intermédiaire d'un système de connexion enfichable à la zone partielle (8), faisant saillie du trou (3), de l'élément de fixation (2).

13. Elément de fixation selon l'une quelconque des revendications 1 à 12, **caractérisé en ce que** la tige (2, 23, 33, 42) ainsi que la zone partielle (8, 50) servant à fixer le support (9), ou le support (36, 37) sont réalisés à partir d'un matériau résistant aux températures élevées.

14. Elément de fixation selon l'une quelconque des revendications 1 à 13, **caractérisé en ce que** la tige (2, 23, 33, 42) est formée à partir d'un métal, en particulier à partir d'un acier à ressorts.

15. Elément de fixation selon l'une quelconque des revendications 1 à 14, **caractérisé en ce que** le support (9, 36, 37) est réalisé à parti d'un matériau métallique.

16. Elément de fixation selon la revendication 15, **caractérisé en ce que** le matériau métallique du support (9, 36, 37) est pourvu d'une gaine, en particulier en plastique.

17. Elément de fixation selon l'une quelconque des revendications 1 à 16, **caractérisé en ce que** le support (9, 36, 37) est formé par une attache multicâble, un pontet pour câbles, un collier de serrage simple ou multiple ou similaire.
